# EUROPÄISCHE PATENTSCHRIFT

(11) **EP 3 877 153 B1**
(45) Veröffentlichungstag und Bekanntmachung des Hinweises auf die Patenterteilung: **04.01.2023**
(21) Anmeldenummer: 19798602.9
(22) Anmeldetag: 04.11.2019
(51) Int. Cl.: B29C 64/153, B33Y 50/02, B33Y 30/00, B33Y 10/00, B29C 64/393, B29C 64/282, B22F 3/105, B22F 10/30

(54) **VERFAHREN ZUM BETREIBEN EINER EINRICHTUNG ZUR ADDITIVEN HERSTELLUNG EINES DREIDIMENSIONALEN OBJEKTS**
METHOD FOR OPERATING A DEVICE FOR ADDITIVE MANUFACTURING OF A THREE-DIMENSIONAL OBJECT
PROCÉDÉ POUR FAIRE FONCTIONNER UN DISPOSITIF DESTINÉ À LA FABRICATION ADDITIVE D'UN OBJET TRIDIMENSIONNEL

(30) Priorität: 08.11.2018 DE 102018127989
(43) Veröffentlichungstag der Anmeldung: 15.09.2021
(73) Patentinhaber: Trumpf Laser- und Systemtechnik GmbH, 71254 Ditzingen (DE)
(72) Erfinder: SCHAAL, Frederik, 70734 Fellbach (DE); SCHWEIKERT, Sven, 70435 Stuttgart (DE); GRONLE, Marc, 70567 Stuttgart (DE); ESSIG, Nicolai, 71272 Renningen (DE)
(74) Vertreter: Trumpf Patentabteilung
(86) Internationale Anmeldenummer: PCT/EP2019/080111
(87) Internationale Veröffentlichungsnummer: WO 2020/094576

(56) Entgegenhaltungen:
- EP-A1- 3 300 885
- WO-A1-2017/187147
- WO-A1-2018/087556
- DE-A1-102016 209 065

## Beschreibung

Die Erfindung betrifft ein Verfahren zum Betreiben einer Einrichtung zur additiven Herstellung eines dreidimensionalen Objekts durch schichtweises Aufbringen und selektives Verfestigen eines, insbesondere pulverförmigen, Aufbaumaterials. Derartige Einrichtungen zur additiven Herstellung eines dreidimensionalen Objekts weisen eine Objektbildungskammer auf in der das zu fertigende Objekt schrittweise erstellt wird. In der Objektbildungskammer ist eine Arbeitsfläche vorgesehen, die ein Baufeld zum Herstellen des dreidimensionalen Objekts aufweist. Das Verfahren bezieht sich dabei auf Herstelleinrichtungen, die wenigstens zwei Strahlquellen und zwei Scaneinheiten aufweisen. Die Scaneinheiten sind ausgebildet und angeordnet, um jeweils einen durch die jeweilige erste bzw. zweite Scaneinheit gesteuerten Strahl der jeweiligen ersten bzw. zweiten Strahlquelle, auf verschiedene Zielpunkte auf dem Baufeld zu richten. Mit anderen Worten, der jeweilige Strahl kann über die Scaneinheiten auf verschiedene Punkte des Baufelds geführt bzw. gelenkt werden. Zumindest der ersten Scaneinheit ist eine erste Sensoreinheit zugeordnet. Der Erfassungsbereich der ersten Sensoreinheit ist über die erste Scaneinheit auf den Zielpunkt der ersten Scaneinheit gerichtet. Die optische Strahlführung kann auch derart sein, dass der Erfassungsbereich der ersten Sensoreinheit über die erste Scaneinheit auf einen in Bewegungsrichtung des ersten Zielpunkts dem ersten Zielpunkt vor- oder nachgelagerten Bereich gerichtet ist. Mit anderen Worten, der Erfassungsbereich der ersten Sensoreinheit erfasst bei aktivierter erster Strahlquelle den Bereich auf dem Baufeld, auf den die Scaneinheit diesen Strahl richtet. Bei deaktivierter erster Strahlquelle erfasst erste Sensoreinheit entsprechend denjenigen Bereich auf dem Baufeld, auf den die Scaneinheit diesen Strahl richten würde.

Die erste und zweite Scaneinheit sind dabei jeweils derart ausgebildet und angeordnet bzw. werden derart betrieben, dass sie ihre Zielpunkte unabhängig voneinander bewegen. Mit anderen Worten, eine Veränderung der Stellung der ersten Scaneinheit verändert nicht die Lage des Zielpunkts der zweiten Scaneinheit und umgekehrt. Die voneinander unabhängige Bewegung der Zielpunkte ermöglicht bspw. unabhängig voneinander verschiedene Stellen auf dem Baufeld mit Strahlung (erster und zweiter Strahl sind unabhängig bewegbar) zu beaufschlagen.

Mit zwei oder mehr Strahlquellen aufweisenden Herstelleinrichtungen sind vorliegend auch Herstelleinrichtungen gemeint, die eine einzige Einrichtung zur eigentlichen Erzeugung eines Strahls aufweisen, wobei dieser Strahl wiederum bspw. mittels eines Strahlteilers (beam splitter) in mehrere Teilstrahlen aufgeteilt wird. Die einzelnen Teilstrahlen des aufgeteilten Strahls stellen dann die mehreren Strahlquellen im Sinne der vorliegenden Erfindung dar.

Zur additiven Herstellung eines dreidimensionalen Objekts sind sogenannte "Selective Laser Sintering" (SLS) oder "Selective Laser Melting" (SLM) Verfahren, also das selektive Lasersintern sowie das selektive Laserschmelzen bekannt. Dazu wird in der Objektbildungskammer das pulverförmige Material, beispielsweise Metall- oder Keramikpulver, mit einer elektromagnetischen Strahlung aus den oben genannten Strahlquellen, insbesondere mit einem Laserlicht, bestrahlt. Mit den beiden Strahlquellen sind also Quellen elektromagnetischer Strahlung gemeint, die zum Aufschmelzen oder Sintern des Aufbaumaterials geeignet sind, sie stellen also Strahlung ausreichender Leistung und geeigneter Wellenlänge bereit. Auf dem Baufeld der Kammer wird eine dünne Pulverschicht aufgebracht, die mit dem Laserlicht zur Herstellung des Objekts gesintert oder geschmolzen wird. Die Herstellung des Objekts erfolgt dabei schrittweise; Pulverschichten werden nacheinander aufgebracht und jeweils gesintert oder geschmolzen. Zwischen den Fertigungsschritten wird das pulverförmige Material mit einer Aufbringungseinrichtung, beispielsweise einem Wischer, einer Walze, einer Bürste oder einer Klinge auf die Bauplattform aufgebracht bzw. aufgestrichen.

Aus der WO 2017/187147 A1 ist ein Verfahren zum Kalibrieren einer Herstellvorrichtung zum additiven Herstellen eines dreidimensionalen Objekts mit wenigstens zwei Scaneinheiten bekannt, bei der ein mit einer ersten Scaneinheit umgelenkter Strahl ein Merkmal in einer Arbeitsebene der Herstellvorrichtung ausbildet, das im Sichtfeld eines Detektors für Strahlung liegt, wobei das Sichtfeld mit einer zweiten Scaneinheit über die Arbeitsebene bewegt wird.

EP 3 300 885 A1 offenbart ein Kalibrierverfahren zum Kalibrieren einer Herstellvorrichtung zum generativen Herstellen eines dreidimensionalen Objekts, bei dem eine erste Scaneinheit einen Überwachungsbereich einer Überwachungseinheit auf ein Baufeld ausrichtet, wobei zumindest ein Teil des Überwachungsbereichs mit einem über eine zweite Scaneinheit geführten Strahl bestrahlt wird.

Der vorliegenden Erfindung liegt die Aufgabe zugrunde, ein Verfahren zum Betrieb der oben genannten Herstelleinrichtung zu schaffen, dass eine möglichst genaue Prozesskontrolle bei geringem apparativen Aufwand ermöglicht. Diese Aufgabe wird durch ein Verfahren gemäß Anspruch 1 gelöst.

Das entsprechende Verfahren weist dabei die folgenden Schritte auf:
Schritt 1: Richten des Erfassungsbereichs der ersten Sensoreinheit mittels der ersten Scaneinheit auf wenigstes einen ersten Teilbereich eines Testkörperbereichs, ohne dass die erste Scaneinheit einen Strahl auf den Testkörperbereich richtet. Über die erste Scaneinheit wird also der Erfassungsbereich der ersten Sensoreinheit in oder in Überlappung mit einem Testkörperbereich angeordnet. Dabei ist die erste Strahlquelle deaktiviert, oder ein von ihr ausgehender Strahl ist derart umgelenkt oder blockiert, dass er nicht über die erste Scaneinheit auf den Testkörperbereich gelenkt wird.
Schritt 2: Bestrahlen zumindest eines Teils des Testkörperbereichs mit einem Strahl, der über die zweite Scaneinheit auf den Testkörperbereich gerichtet ist. Die zweite Strahlquelle wird also jedenfalls temporär aktiviert und ihr Strahl wird über die zweite Scaneinheit auf den Testkörperbereich geführt.

Optional kann in einem Schritt 3 ein Auswerten von durch die erste Sensoreinheit und/oder durch weitere Sensoreinheiten erfassten Messsignalen erfolgen. Dabei können die erfassten Messsignale beispielsweise mit Messsignalen aus einem identischen Referenz-Aufbauvorgang abgeglichen werden. Denkbar ist bspw. alternativ oder zusätzlich auch der Vergleich der erfassten Messsignale mit Simulationsergebnissen. Die erfassten Messsignale können auch mit Messsignalen verglichen werden, die an anderen Stellen, beispielsweise des Testkörpers, während des Aufbauvorgangs erfasst wurden.

Das erfindungsgemäße Verfahren betrifft also die Überwachung eines Aufbauvorgangs eines Testkörpers, bzw. die Sammlung von Messdaten während diesem Aufbau. Ein Testkörper ist dabei ein aufgebautes Objekt, das kein für eine spätere Verwendung vorgesehenes Bauteil darstellt, sondern lediglich bspw. zur Qualitätskontrolle bzw. zur Einstellung der verwendeten Herstelleinrichtung dient. Ein Testkörper kann beispielsweise im Anschluss an seinen Aufbau einer Analyse zugeführt werden. Typischerweise ist eine derartige Analyse zerstörender Natur, beispielsweise kann eine metallurgische Analyse durchgeführt werden. Beispielsweise kann die Porosität anhand von Schliffbildern ermittelt werden.

Aus dem Stand der Technik sind Verfahren bekannt die einen dezidierten, also räumlich fest vorgegebenen, Testkörperbereich vorsehen, der mittels eines dezidierten und fest installierten Sensors, der einen festen Erfassungs- oder Überwachungsbereich hat, überwacht oder beobachtet wird. Ein derartiger fest installierter Sensor hat also einen räumlich auf den Testkörperbereich festgelegten Erfassungsbereich. Entsprechend kommt ein derartiger Sensor nur dann zum Einsatz, wenn ein entsprechender Testkörper aufgebaut wird. Während Bauteile aufgebaut werden, also Teile die für eine spätere Verwendung vorgesehen sind, ist dieser Sensor deaktiviert und erfüllt keine Funktion. Wenn der für den Testkörper vorgesehene Platz für ein reguläres Bauteil benötigt wird, kann dort im Gegenzug kein Testkörper aufgebaut werden obwohl möglicherweise an einer anderen Stelle ausreichend Raum vorhanden wäre. Da beim Betrieb der Herstelleinrichtung überwiegend Bauteile gefertigt werden und im Vergleich hierzu nur selten Testkörper, wird der dem Testkörperbereich zugewiesene Sensor kaum verwendet im Vergleich zur Gesamtlaufzeit der Herstelleinrichtung.

Die vorliegende Erfindung ermöglicht es nun einen Sensor zu verwenden, der nicht nur dann zum Einsatz kommt, wenn ein Testkörper aufgebaut wird, sondern beim Erstellen der regulären Bauteile ebenso zum Einsatz kommt bzw. zum Einsatz kommen kann. Hierdurch wird die Herstelleinrichtung effizienter genutzt bzw. es sind weniger Komponenten für die Herstelleinrichtung notwendig. Gleichzeitig bietet das erfindungsgemäße Verfahren jedoch auch eine höhere Flexibilität und die Möglichkeit nach Belieben Testkörper aufzubauen, sodass beispielsweise die Überwachung der durchgeführten Prozesse bei Bedarf genauer und beispielsweise mit mehr Testkörpern durchgeführt werden kann.

Das erfindungsgemäße Verfahren kann in einer Ausführungsform mittels einer Herstelleinrichtung durchgeführt werden, in der der zweiten Scaneinheit eine zweite Sensoreinheit zugeordnet ist. Der Erfassungsbereich der zweiten Sensoreinheit ist dabei über die zweite Scaneinheit auf den Zielpunkt der zweiten Scaneinheit gerichtet. Die optische Strahlführung kann auch derart sein, dass der Erfassungsbereich der zweiten Sensoreinheit über die zweite Scaneinheit auf einen in Bewegungsrichtung des zweiten Zielpunkts dem zweiten Zielpunkt vor- oder nachgelagerten Bereich gerichtet ist. In anderen Worten, entsprechend der ersten Sensoreinheit und der ersten Scaneinheit erfasst der Erfassungsbereich der zweiten Scaneinheit bei aktivierter zweiter Strahlquelle den Punkt auf dem Baufeld, auf den die Scaneinheit den Strahl der zweiten Strahlquelle führt, wenn diese aktiviert ist. Dabei kann beim Bestrahlen des Teils des Testkörperbereichs mit dem Strahl, der über die zweite Scaneinheit auf den Testkörperbereich gerichtet ist, die zweite Sensoreinheit den Zielpunkt der zweiten Scaneinheit erfassen. Der durch Bestrahlung mittels der zweiten Scaneinheit bzw. der zweiten Strahlquelle durchgeführte Aufbauvorgang im Testkörperbereich kann also bei dieser Variante mittels der ersten und der zweiten Sensoreinheit beobachtet werden. Insbesondere kann diese Beobachtung erfolgen, während der Zielpunkt der zweiten Scaneinheit über den Testkörperbereich bewegt wird. Der Erfassungsbereich der ersten Sensoreinheit kann dabei stationär gehalten werden oder bewegt werden.

Bei den beiden Sensoreinheiten handelt es sich, wie oben beschrieben, jeweils um so genannte "on-axis"-Sensoren, deren Erfassungsbereich jedenfalls teilweise über den gleichen optischen Pfad verläuft wie der Strahl der jeweiligen Strahlquelle. Um eine Überlagerung der Messergebnisse mit der Strahlung der Strahlquelle zu vermeiden, kann ein Strahlteiler oder auch Beam Splitter oder eine andere Einrichtung zum Herausfiltern oder Ablenken der Strahlung der Strahlquelle im optischen Gang der Sensoreinheiten angeordnet sein, sodass lediglich von dem Baufeld ausgehende Strahlung von den Sensoreinheiten erfasst wird.

Der Erfassungsbereich der ersten Sensoreinheit kann mittels der ersten Scaneinheit ebenfalls bewegt werden. Beispielsweise kann der Erfassungsbereich der ersten Sensoreinheit derart bewegt werden, dass er sich stets um den Zielpunkt der zweiten Scaneinheit erstreckt. Es ist jedoch auch möglich den Erfassungsbereich der ersten Scaneinheit dem Zielpunkt der zweiten Scaneinheit vorangeführt zu bewegen oder ihn dem Zielpunkt der zweiten Scaneinheit nachgeführt zu bewegen. Im Sinne der Erfindung kann hierdurch, also durch das Mitführen des Überwachungsbereichs (auf, vor oder nach dem Zielpunkt) der Aufbauvorgang gesteuert oder geregelt werden. Der Erfassungsbereich kann also jeweils in einem, bspw. gleichbleibenden Abstand vor oder hinter dem Zielpunkt gehalten und mit diesem mitbewegt werden. Ebenfalls ist es möglich den Erfassungsbereich der ersten Sensoreinheit stationär, also unbewegt, zu halten. Dabei kann der Erfassungsbereich derart angeordnet sein, dass der Zielpunkt der zweiten Scaneinheit während des Aufbaus des Testkörpers durch den Erfassungsbereich der ersten Sensoreinheit hindurch bewegt wird. Der Erfassungsbereich der ersten Sensoreinheit kann jedoch auch derart angeordnet und stationär gehalten sein, dass der Zielpunkt der zweiten Scaneinheit während des Bestrahlens nicht durch den Erfassungsbereich der ersten Sensoreinheit geführt wird. Beispielsweise kann hierdurch die Leitung der durch die Bestrahlung eingetragenen Wärme im Testkörper ermittelt werden. Hierdurch können beispielsweise Rückschlüsse auf die Wärmeleitfähigkeit unterschiedlicher Bereiche im Testkörper gezogen werden. Im Sinne der Erfindung ist auch eine entsprechende Führung von Erfassungsbereich der ersten Sensoreinheit und Zielpunkt der zweiten Scaneinheit beim Aufbau eines eigentlichen Bauteils, also einem aufgebauten Objekt, das nicht ausschließlich für Testzwecke vorgesehen ist. Bspw. kann damit die Wärmeleitfähigkeit des Bauteils ermittelt und mit bekannten Werten oder Werten des Testkörpers verglichen werden.

Bspw. können ein Bauteil und ein baugleicher Testkörper aufgebaut werden und beide entsprechend dem erfindungsgemäßen Verfahren untersucht werden, indem eine entsprechende Führung von Erfassungsbereich der ersten Sensoreinheit und Zielpunkt der zweiten Scaneinheit beim Aufbau des eigentlichen Bauteils und des Testkörpers durchgeführt wird. Dies kann auch zeitgleich mit separaten ersten Sensoreinheiten und zweiten Scaneinheiten durchgeführt werden. Es ist möglich aus den Resultaten der (zerstörenden) Untersuchung des Testkörpers Rückschlüsse auf die eigentlichen Bauteile zu ziehen. Die Daten des Testkörpers und oder des Bauteils können dann wiederum mit weiteren nachfolgend oder parallel aufgebauten Bauteilen verglichen werden.

Es ist möglich bei dem erfindungsgemäßen Verfahren die während dem Aufbau des Testkörpers erfassten Werte mit Referenzwerten zu vergleichen. Die Referenzwerte können bspw. aus dem Aufbauvorgang eines Testkörpers oder eines Bauteils stammen. Im Sinne der Erfindung kann der Aufbauvorgang des Testkörpers über den Vergleich der erfassten Werte mit den Referenzwerten gesteuert oder geregelt werden. Bspw. kann vorgesehen sein, dass bei einem Abweichen der erfassten Werte von den Referenzwerten ein Korrekturschritt durchgeführt wird. Denkbar ist auch, dass bei einem Abweichen der erfassten Werte von den Referenzwerten eine Anpassung der Verfahrensführungsparamter des Aufbaus des Testkörpers durchgeführt wird.

Im Sinne der Erfindung ist auch, die während dem Aufbauvorgang des Testkörpers erfassten Werte als Referenzwerte für einen Aufbauvorgang eines Bauteils zu verwenden. Der Aufbauvorgang des Bauteils kann basierend auf einem Vergleich der während diesem Aufbau erfassten Werte mit den Referenzwerten gesteuert oder geregelt werden. Die Referenzwerte können aber auch verwendet werden um den Aufbauvorgang des Bauteils zu kontrollieren, also um ein Abweichen vom gewünschten Ablauf zu erkennen. Die Steuerung oder Regelung können dabei wie oben beschrieben erfolgen. Über den Vergleich der erfassten Werte mit den Referenzwerten können also bspw. die Verfahrensführungsparamter angepasst werden. Bspw. kann vorgesehen sein, dass bei einem Abweichen der erfassten Werte von den Referenzwerten ein Korrekturschritt durchgeführt wird. Denkbar ist auch, dass bei einem Abweichen der erfassten Werte von den Referenzwerten eine Anpassung der Verfahrensführungsparamter des Aufbaus des Testkörpers durchgeführt wird.

Das Verfahren kann in einer Ausführungsform mittels einer Herstelleinrichtung durchgeführt werden, die eine dritte Scaneinheit und eine dritte Sensoreinheit und ggf. eine dritte Strahlquelle aufweist. Dies ermöglicht die Durchführung von detaillierteren Messungen. Die dritte Scaneinheit kann ggf. ausgebildet und angeordnet ist, um einen durch die dritte Scaneinheit gesteuerten Strahl einer dritten Strahlquelle auf verschiedene Zielpunkte auf dem Baufeld zu richten. Sie kann also entsprechend der ersten und oder zweiten Scaneinheit ausgebildet sein. Bei Verwendung einer derartigen Herstelleinrichtung kann während des Bestrahlens mittels der zweiten Scaneinheit der Erfassungsbereich der dritten Sensoreinheit mittels der dritten Scaneinheit auf wenigstes einen zweiten Teilbereich des Testkörperbereichs gerichtet sein ggf. ohne dass die dritte Scaneinheit einen Strahl auf den Testkörperbereich richtet. Hierdurch ergibt sich eine zusätzliche Überwachungsmöglichkeit und es können weitere Informationen, die Aufschluss über das aufgebaute Objekt bzw. den Aufbauvorgang liefern, gesammelt werden.

Während des Bestrahlens mittels der zweiten Scaneinheit können der Erfassungsbereich der ersten Sensoreinheit und der dritten Sensoreinheit einander überlappen. Möglich ist auch, dass die beiden Erfassungsbereiche konzentrisch zueinander angeordnet sind. Die Erfassungsbereiche können insbesondere kreisförmig ausgebildet sein. Es ist ebenso möglich, dass der Erfassungsbereich einer der Sensoreinheiten derart, insbesondere eingestellt, ist, dass er den Erfassungsbereich der anderen Sensoreinheit vollständig enthält. Hierzu kann beispielsweise einer der Erfassungsbereiche bspw. mittels einer der jeweiligen Scaneinheit zugeordneten Fokussieroptik fokussiert sein und der andere Erfassungsbereich entsprechend defokussiert sein, sodass er ein größeres Gebiet erfasst.

Das Bestrahlen mittels der zweiten Scaneinheit kann derart durchgeführt werden, dass zunächst pulverförmiges Aufbaumaterial (jedenfalls teilweise, vorzugsweise vollständig) aufschmilzt und sich anschließend verfestigt. Hierbei wird also der eigentliche Testkörper aufgebaut. Hierzu kann insbesondere die Bestrahlung mit einer derartigen Intensität durchgeführt werden, dass das Aufbaumaterial aufschmilzt. Entsprechend ist die Strahlungsart, beispielsweise die Laserstrahlung, derart gewählt, dass sie in der Lage ist genügend Energie an das Aufbaumaterial zu übertragen. Bei dieser Art der Verfahrensführung wird also der eigentliche Aufbauvorgang des Testkörpers mittels der Sensoreinheit bzw. Sensoreinheiten beobachtet bzw. erfasst.

Erfindungsgemäß erfolgt das Bestrahlen mittels der zweiten Scaneinheit im Anschluss an einen Bestrahlungsvorgang in dem zunächst pulverförmiges Aufbaumaterial aufgeschmolzen wurde und sich anschließend verfestigt hat, wobei die Bestrahlung mit dem Strahl der zweiten Scaneinheit impulsartig und auf den bereits verfestigten Teil des Aufbaumaterials im Testkörperbereich erfolgt. Mit anderen Worten, die Durchführung des Verfahrens bezieht sich auf einen bereits aufgebauten Teil des Testkörpers. Bei dieser Art der Verfahrensführung wird ein bereits aufgebauter Teil des Testkörpers mit einer Strahlung beaufschlagt. Dabei ist gemäß der Erfindung vorgesehen, dass die Bestrahlung derart durchgeführt wird, insbesondere mit einer derartigen Intensität durchgeführt wird, dass das bereits verfestigte Aufbaumaterial nicht aufschmilzt. Mit anderen Worten, durch die Bestrahlung bei dieser Art der Verfahrensführung wird ein Teil des bereits aufgebauten Testkörpers mittels einer strahlungsbasiert zugeführten definierten Energiemenge erwärmt. Es kann dann über die Überwachung bzw. Erfassung mittels der Sensoreinheit bzw. Sensoreinheiten beispielsweise die Wärmeleitung im aufgebauten Testkörpers geprüft bzw. ermittelt werden. Abweichungen von der erwarteten Wärmeleitfähigkeit können beispielsweise ein Indikator für Einschlüsse oder Lunkerbildung sein. Erfindungsgemäß erfasst der Erfassungsbereich der ersten und optional ggf. der dritten Sensoreinheit bei den eben beschriebenen Varianten, in denen ein bereits verfestigter Teil des Testkörpers bestrahlt wird, einen verfestigten Bereich des Aufbaumaterials, der zu dem bestrahlten Teil beabstandet angeordnet ist. Dabei kann eine direkte Verbindung aus verfestigtem Material zwischen dem bestrahlten und dem erfassten Bereich des Testkörpers bestehen. Insbesondere kann sich die direkte Verbindung in der horizontalen Ebene erstrecken, in der die Bestrahlung durchgeführt wird. In einer derartigen Konstellation kann beispielsweise das Wärmeleitverhalten in Abschnitten des Testkörpers gemessen werden.

Wie bereits oben erwähnt, kann das erfindungsgemäße Verfahren die Auswertung der erfassten Messdaten umfassen. Die durch die erste Sensoreinheit und/oder ggf. dritte Sensoreinheit erfassten Messsignale können im Rahmen einer Auswertung beispielsweise mit Messignalen aus einer identischen Messung aus einem vorangegangenen Aufbau eines Testkörpers verglichen werden. Denkbar ist auch, dass Messsignale unterschiedlicher Stellen des Testkörpers miteinander verglichen werden. Insbesondere ist es möglich, dass das Wärmeleitverhalten in unterschiedlichen Abschnitten des Testkörpers miteinander verglichen wird. Zur Ermittlung des Wärmeleitverhaltens kann wie oben vorgeschlagen die Bestrahlung eines bereits verfestigten Teils des Testkörpers erfolgen und ein zum bestrahlten Teil beabstandeter Abschnitt des Testkörpers durch die Sensoreinheit(en) erfasst werden.

Es kann im Sinne der Erfindung vorgesehen sein, dass das Verfahren den Aufbau von zwei Testkörpern umfasst. Die Bestrahlung mittels des Strahls der zweiten Scaneinheit kann dabei beim Aufbau der beiden Testkörper jeweils identisch sein. Mit anderen Worten, der Aufbau der beiden Testkörper kann unter exakt gleicher Führung des Strahls der zweiten Scaneinheit erfolgen. Die Erfassung mittels der zweiten Sensoreinheit und/oder ggf. der dritten Sensoreinheit kann beim Aufbau der beiden Testkörper jeweils, wenigstens temporär, vorzugsweise vollständig, identisch sein. Mit anderen Worten die Erfassungsbereiche der jeweiligen Sensoreinheit können beim Aufbau beider Testkörper die gleichen Bewegungsmuster durchlaufen bzw. auf die gleichen Positionen stationär gerichtet sein. Ein entsprechendes Verfahren kann anschließend einen Vergleich der durch die Sensoreinheiten ermittelten Messwerte bezüglich der beiden Aufbauvorgänge der Testkörper umfassen. Denkbar ist beim Aufbau von zwei Testkörpers jedoch auch, dass die Sensoreinheiten zunächst ein bestimmtes Bewegungsmuster der Erfassungsbereiche durchlaufen bzw. einer bestimmten Position während des Aufbauvorgangs positioniert sind und in einem weiteren Schritt die erfassten Messsignale im Rahmen einer Simulation verwendet werden. Beim Aufbau des zweiten Testkörpers können die Erfassungsbereiche dann in einem anderen Bewegungsmuster geführt bzw. an einer anderen Position platziert werden um die Ergebnisse der Simulation zu verifizieren. Dies ist ebenso bei der Verwendung einer Sensoreinheit möglich.

Das Verfahren kann die metallurgische Analyse eines im Testkörperbereich aufgebauten Testkörpers umfassen. Insbesondere ist dies der Testkörper dessen Aufbauvorgang durch die Sensoreinheiten erfasst wurde.

Das erfindungsgemäße Verfahren kann insbesondere derart durchgeführt werden, dass der Testkörperbereich räumlich zwischen zwei Bauteilen, die ebenfalls auf dem Baufeld aufgebaut werden, liegt bzw. der Aufbauvorgang des Testkörpers räumlich zwischen zwei Bauteilen erfolgt.

Der im Rahmen des Verfahrens aufgebaute Testkörper kann beispielsweise ein streifenförmiges Muster umfassen oder ein streifenförmiges Muster sein. Insbesondere ist es möglich, dass innerhalb eines Testkörperbereichs, der beispielsweise kreisförmig ausgebildet sein kann, Linien, die jeweils parallel zueinander verlaufen, verfestigt werden. Der Erfassungsbereich der ersten Sensoreinheit kann beispielsweise im Zentrum des Testkörperbereichs angeordnet sein, wobei während des Aufbauvorgangs des Testkörpers verfestigte Linien durch den Erfassungsbereich der ersten Sensoreinheit verlaufen. Der Erfassungsbereich der ersten Sensoreinheit kann in diesem Beispiel während des gesamten Aufbauvorgangs des Testkörpers stationär in dieser Position gehalten werden. Der Erfassungsbereich der dritten Sensoreinheit kann beispielsweise neben dem Erfassungsbereich der ersten Sensoreinheit angeordnet sein. Denkbar ist jedoch auch, dass der Erfassungsbereich der dritten Sensoreinheit größer eingestellt ist als derjenige der ersten Sensoreinheit, beispielsweise durch eine entsprechende Fokussierung bzw. Defokussierung. Er kann beispielsweise um den Erfassungsbereich der ersten Sensoreinheit herum angeordnet sein, sodass er diesen vollständig enthält. Beispielsweise können die beiden Erfassungsbereiche kreisförmig und konzentrisch zueinander ausgerichtet sein. Die Sensoreinheit(en) können das Abkühl- und Aufheizverhalten im Testkörper erfassen. Die erfassten Daten können mit dem Aufbau eines gleichen und früheren Testkörpers verglichen werden. Die stationäre Positionierung des Erfassungsbereichs ermöglicht durch entsprechende Auswertung Rückschlüsse auf den Wärmehaushalt bzw. die Wärmeleitfähigkeit in dem aufgebauten Testkörper.

Im Sinne der Erfindung ist es auch, den Testkörper impulsartig zu bestrahlen, wobei der Energieeintrag derart ist, dass der Testkörper sich lediglich erwärmt und nicht aufschmilzt. Wobei über die erste Sensoreinheit das Aufwärm- und/oder Abkühlverhalten im bestrahlten oder einem angrenzenden Bereich erfasst werden kann. Hieraus kann zum einen die Zeitkonstante des Aufheiz-/Abkühlvorgangs bzw. die Systemantwort eines bestimmten Bereichs des Bauteils oder Testkörpers bestimmt werden.

Die Sensoreinheiten können vom Testkörperbereich emittierte Wärmestrahlung erfassen und können beispielsweise Pyrometer sein. Die Sensoreinheit können insbesondere Fotodioden umfassen. Es können auch flächige Sensoren, wie Kameras (bzw. Wärmebildkameras) eingesetzt werden. Weitere Sensoren können aber auch Bolometer sein. Die Sensoreinheiten können insbesondere die Temperatur im jeweiligen Erfassungsbereich erfassen. Insbesondere kann die zeitliche Entwicklung der Temperatur im jeweiligen Erfassungsbereich erfasst werden. Es kann jeweils das Aufwärm- und/oder Abkühlverhalten erfasst werden. Zum Erfassen des Aufwärmverhaltens wird die Temperaturentwicklung ab Beginn der Bestrahlung erfasst. Zum Erfassen des Abkühlverhaltens wird die Temperaturentwicklung nach Beendigung der Bestrahlung erfasst. Dabei ist es möglich die Anfangsphase der Abkühlung zu beobachten oder die Beobachtung durchzuführen, bis die Temperatur im Erfassungsbereich wieder auf den Ausgangswert gesunken ist.

In einem Auswerteschritt des Verfahrens ist es insbesondere möglich die Zeitkonstante für einen erwärmten Zielpunkt zu ermitteln. Die Zeitkonstante entspricht dabei dem Produkt aus dem Wärmewiderstand und der Wärmekapazität, wobei die Wärmekapazität wiederum dem Produkt aus spezifischer Wärmekapazität und Volumen entspricht.

Bei dem erfindungsgemäßen Verfahren sind die erste und ggf. dritte Strahlquelle jeweils inaktiv, während die zweite Strahlquelle einen Strahl auf den Testkörperbereich richtet und die erste und ggf. dritte Sensoreinheit jeweils ein Teil des Testkörperbereichs erfasst bzw. beobachtet. Die zweite Strahlquelle (Scaneinheit und Strahlquelle) kann die gleiche Sensorik (Sensoreinheit) wie Strahlengang 1 und 3 (Sensoreinheiten 1 und 3 mit Scaneinheiten 1 und 3). Die Sensorik von Strahlengang 2 kann ebenfalls aktiviert sein, so dass man auch das mitbewegte Wärmesignal im Rahmen einer Datenfusion mit den anderen Informationsquellen zusammenführen und gesamtheitlich auswerten kann.

Im Anschluss an den (teilweisen) Aufbau des Testkörpers können die erste und dritte Scaneinheit mit den ihnen zugeordneten Sensoreinheiten zum Aufbau von Bauteilen und der Beobachtung dieses Aufbauvorgangs genutzt werden. Durch die Anwendung des erfindungsgemäßen Verfahrens ist entsprechend der apparative Aufwand gering, da ohnehin an den ersten gegebenenfalls dritten Scaneinheiten vorhandene Sensoreinheiten zur Beobachtung des Testkörperbereichs genutzt werden, anstatt einen separaten Testkörperbereichssensor vorzusehen, der lediglich dann genutzt wird, wenn der Testkörper aufgebaut wird. Entsprechend kann Teil des erfindungsgemäßen Verfahrens auch sein, dass im Anschluss an den Aufbau und die Beobachtung des Testkörpers und/oder vor dem Aufbau und der Beobachtung des Testkörpers mittels der ersten und/oder zweiten Scaneinheit ein Strahl auf das Baufeld gerichtet wird, um ein Bauteil aufzubauen.

Weitere Einzelheiten und vorteilhafte Ausgestaltungen sind der nachfolgenden Beschreibung zu entnehmen, anhand derer Ausführungsbeispiele der Erfindung näher beschrieben und erläutert sind.

Es zeigen:
Figur 1 eine schematische Ansicht einer
Herstelleinrichtung zum additiven Herstellen eines dreidimensionalen Objekts auf der das erfindungsgemäße Verfahren durchgeführt wird;
Figur 2 eine schematische Draufsicht auf das Baufeld der Herstelleinrichtung;
Figur 3 eine schematische Draufsicht auf den Testkörperbereich des Baufelds der Herstelleinrichtung, wobei eine nicht unter den Schutzumfang der angefügten Ansprüche fallende Ausführungsform illustriert ist; und.
Figur 4 eine schematische Draufsicht auf den Testkörperbereich des Baufelds der Herstelleinrichtung, wobei eine weitere mögliche Art der Verfahrensführung illustriert ist.

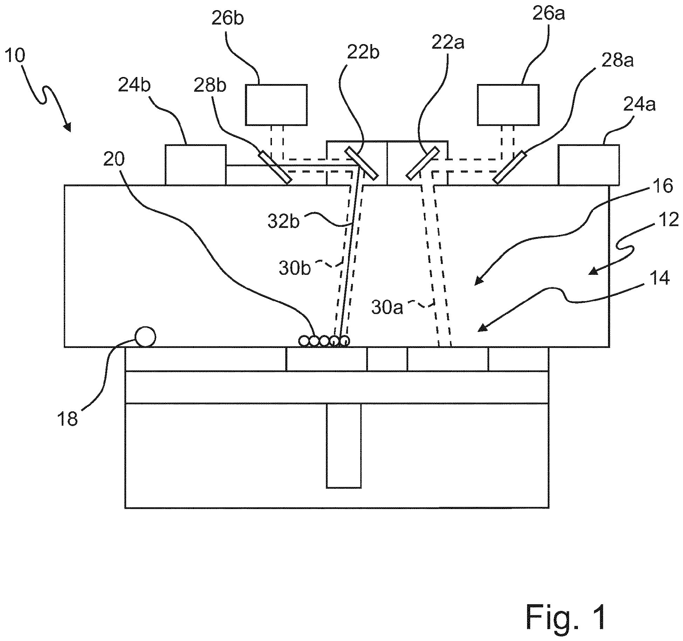

In Figur 1 ist eine Herstelleinrichtung 10 gezeigt, auf der das erfindungsgemäße Verfahren durchgeführt wird. Die Vorrichtung 10 weist eine Objektbildungskammer 12 auf. In der Objektbildungskammer 12 ist eine Arbeitsfläche 14 angeordnet, die ein Baufeld 16 aufweist. In der Objektbildung 12 ist ebenso eine Aufbringungseinrichtung 18 angeordnet, die im vorliegenden Beispiel in Form einer Walze ausgebildet ist aber bspw. auch durch eine Rakel ausgebildet sein kann.

Pulverförmiges Aufbaumaterial 20, das vorliegend schichtartig auf dem Baufeld 16 angeordnet ist, ist lediglich schematisch und bereichsweise dargestellt, wobei die Darstellung stark vergrößert ist. Pro schichtweisem Aufbauvorgang werden typischerweise zwischen 1 µm und 200 µm pulverförmiges Aufbaumaterial 20 schichtartig mittels der Aufbringungseinrichtung 18 über das Baufeld 16 verteilt.

Die Herstelleinrichtung umfasst im vorliegenden Beispiel zwei Scaneinheiten 22. Der ersten Scaneinheit 22a ist eine erste Strahlquelle 24a zugeordnet und der zweiten Scaneinheit 22b ist eine zweite Strahlquelle 24b zugeordnet. Entsprechend ist den jeweiligen Scaneinheiten 22 eine jeweilige Sensoreinheit 26 sowie ein Strahlteiler 28 zugeordnet. Über den Strahlteiler 28 wird zum einen ein Erfassungsbereich 30 der Sensoreinheiten auf die Scaneinheiten 22 geführt und zum anderen ein jeweiliger Strahl 32 der Strahlungsquellen 24 in den gleichen optischen Pfad eingekoppelt.

Die erste Strahlungsquelle 24a ist dabei in Figur 1 im deaktivierten Zustand gezeigt, sodass von ihr kein Strahl 32a ausgeht.

Die zweite Strahlungsquelle 24b hingegen ist in Figur 1 im aktivierten Zustand gezeigt, sodass von ihr ein zweiter Strahl 32b ausgeht. Der Strahl 32b ist über die zweite Scaneinheit 22b auf einen Testkörperbereich 34 des Baufeldes 16 gerichtet.

Die Erfassungsbereiche 30 der Sensoreinheiten 26 sind über die jeweiligen Scaneinheiten 22 ebenfalls auf den Testkörperbereich 34 des Baufeldes 16 gerichtet. Dabei ist der Erfassungsbereich 30b der zweiten Sensoreinheit 26b auf einen Zielpunkt 36b der zweiten Scaneinheiten 22b gerichtet. Der Zielpunkt 36 ist dabei derjenige Bereich auf dem Baufeld 16 auf den die Scaneinheit 22 den entsprechenden Strahl 32 führt. Im Fall der ersten Scaneinheiten 22a ist der Erfassungsbereich 30a der ersten Sensoreinheit 26a ebenfalls auf den entsprechenden Zielpunkt 36a der ersten Scaneinheiten 22a gerichtet, wobei der Zielpunkt 36a dem Bereich auf dem Baufeld 16 entspricht, auf den die Scaneinheit 22 den entsprechenden Strahl 32 führt, sobald die erste Strahlquelle 24a aktiviert wird.

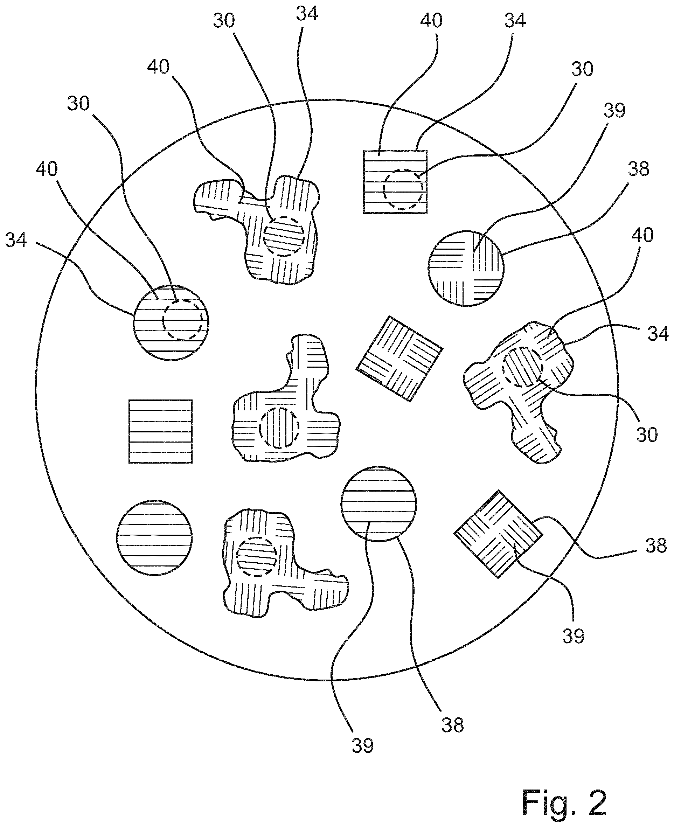

Figur 2 zeigt das Baufeld 16 der Herstelleinrichtung 10 in einer schematischen Draufsicht.

Auf dem Baufeld 16 sind Testkörperbereiche 34 und Bauteilbereiche 38 angeordnet. In den Bauteilbereichen 38 werden Bauteile 39, also Teile, die für eine spätere Verwendung vorgesehen sind aufgebaut. In den Testkörperbereichen 34 hingegen werden Testkörper 40 aufgebaut. Die Testkörper 40 dienen lediglich zu Testzwecken und sind für keinerlei spätere Verwendung vorgesehen. Sie können jedoch beispielsweise im Anschluss an ihren Aufbau und ggf. einer Vermessung durch nachfolgende Bestrahlung metallurgisch analysiert werden. Beispielsweise können Schliffbilder der Testkörper 40 erstellt werden, um ihre Gefügestruktur zu analysieren. Die an den Testkörpern durchgeführte Überwachung kann auch an Bauteilen 39 durchgeführt werden. Wenn gleiche Messwerte erhalten werden und Bauteil und Testkörper entsprechend aufgebaut sind, können die Ergebnisse der (zerstörenden) Untersuchung des Testkörpers auf das Bauteil übertragen werden. Ergibt sich bspw., dass diese in Ordnung bzw. fehlerfrei sind, kann davon ausgegangen werden, dass die eigentlichen Bauteile ebenfalls in Ordnung sind.

Wie in Figur 2 gut ersichtlich ist, ist es durch den Einsatz einer Sensoreinheit in Kombination mit einer Scaneinheit möglich die Testkörperbereiche 34 an quasi beliebigen Stellen auf dem Baufeld 16 anzuordnen.

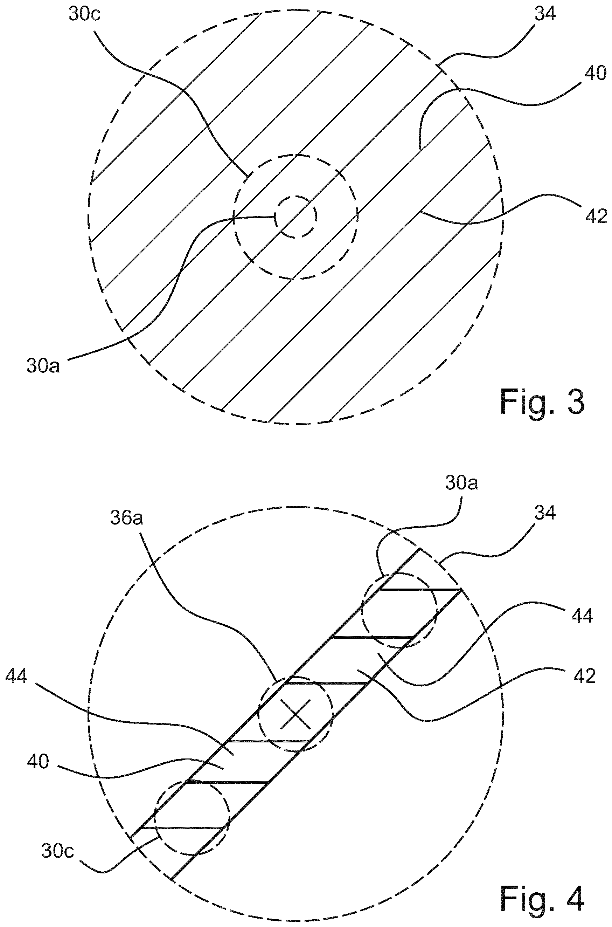

In Figur 3 ist eine nicht unter den Schutzumfang der angefügten Ansprüche fallende Ausführungsform schematisch illustriert. Ähnlich wie in Figur 2 ist dabei eine Draufsicht auf das Baufeld 16 gezeigt, wobei die Darstellung jedoch auf den Testkörperbereich 34 bzw. einen der Testkörperbereiche 34 beschränkt ist.

Bei der in Figur 3 gezeigten Variante des erfindungsgemäßen Verfahrens wird als Testkörper 40 in einem der Testkörperbereiche 34 ein streifenförmiges Muster aufgebaut. Der Testkörperbereich 34 ist dabei kreisförmig ausgebildet und einzelne Linien 42 werden jeweils parallel zueinander verlaufend angeordnet verfestigt. Hierzu wird der Zielpunkt 36b der zweiten Scaneinheit 22b bei aktivierter zweiter Strahlquelle 24b entlang der gewünschten Linien über den Testkörperbereich 34 bewegt. Die Strahlungsintensität der Strahlquelle 24b ist dabei derart mit der durch die Scaneinheit 22b vorgegebenen Bewegungsgeschwindigkeit des Zielpunkts 36b abgestimmt, dass das pulverförmige Aufbaumaterial 20 aufschmilzt, wenn der Zielpunkt 36b über das Aufbaumaterial 20 bewegt wird. Nachdem der Zielpunkt 36b eine bestimmte Stelle passiert hat kühlt das geschmolzene Aufbaumaterial 20 wieder ab und erstarrt, wodurch der Testkörper 34 schichtweise aufgebaut wird. Die zweite Sensoreinheit 26b kann dabei aktiviert sein und die jeweilige Bildung des Schmelzpools beobachten. Dies ist jedoch optional.

Bei der in Figur 3 illustrierten nicht unter den Schutzumfang der angefügten Ansprüche fallende Ausführungsform ist der Erfassungsbereich 30a der ersten Sensoreinheit 26a im Zentrum des Testkörperbereichs 34 angeordnet. Der Erfassungsbereich 30c der dritten Sensoreinheit 26c ist vorliegend defokussiert und dadurch größer eingestellt als derjenige der ersten Sensoreinheit 26a. Der Erfassungsbereich 30c der dritten Sensoreinheit 26c ist um den Erfassungsbereich 30a der ersten Sensoreinheit 26a herum angeordnet, sodass er diesen vollständig enthält. Beide Erfassungsbereiche 30 sind kreisförmig und konzentrisch zueinander ausgerichtet. Während des Aufbauvorgangs des Testkörpers 40 läuft der Zielpunkt 36b teilweise durch die beiden Erfassungsbereiche 30a und 30c. In dem vorliegenden Beispiel werden während des gesamten Aufbauvorgangs des Testkörpers 40 beide Erfassungsbereiche 30a und 30c stationär in den in Figur 3 gezeigten Positionen gehalten.

Die Sensoreinheit(en) 26 können in der eben beschriebenen Konfiguration das Abkühl- und Aufheizverhalten des Aufbaumaterials 20 beim Aufbau des Testkörpers 40 erfassen.

In einem Auswertungsschritt des erfindungsgemäßen Verfahrens können die erfassten Daten bspw. mit dem Aufbau eines gleichen und früheren Testkörpers 40, dessen Aufbau auf die gleiche Art und Weise vermessen wurde, verglichen werden.

In diesem Sinne illustriert Figur 3 eine nicht unter den Schutzumfang der angefügten Ansprüche fallende Ausführungsform, bei der der Aufbau des in Figur 3 gezeigten Testkörpers 40 und die in Figur 3 illustrierte Erfassung durch die Sensoreinheiten 26 zweimal hintereinander durchgeführt wird und die jeweiligen Messergebnisse der beiden Aufbauvorgänge der Testkörper 40 in einem Auswerteschritt miteinander verglichen werden.

In Figur 4 ist eine weitere mögliche Art der Verfahrensführung schematisch illustriert, wobei wiederum eine Draufsicht auf den Testkörperbereich 34 des Baufelds 16 der Herstelleinrichtung 10 gezeigt ist.

Das Bestrahlen mittels der zweiten Scaneinheit 22b im Rahmen des erfindungsgemäßen Verfahrens kann, wie im Zusammenhang mit Figur 3 erläutert, derart durchgeführt werden, dass das zunächst pulverförmige Aufbaumaterial 20 sich verfestigt, typischerweise dadurch, dass es aufschmilzt und anschließend erstarrt und sich verfestigt. Hierbei wird also der eigentliche Testkörper 40 aufgebaut. Bei dieser Art der Verfahrensführung wird also der eigentliche Aufbauvorgang des Testkörpers 40 mittels der Sensoreinheit(en) 26 beobachtet bzw. erfasst.

In Figur 4 ist eine Verfahrensvariante illustriert, bei der das Bestrahlen mittels der zweiten Scaneinheit 22b im Anschluss an einen Bestrahlungsvorgang erfolgt in dem das zunächst pulverförmige Aufbaumaterial 20 bereits verfestigt wurde. Die Bestrahlung im Rahmen des erfindungsgemäßen Verfahrens kann dann mit dem Strahl 32b der zweiten Scaneinheit 22b auf den bereits verfestigten Teil des Aufbaumaterials 20 im Testkörperbereich 34, also auf den bereits aufgebauten Testkörper 40, erfolgen. Bei dieser Art der Verfahrensführung wird die Bestrahlung impulsartig durchgeführt.

Die Bestrahlung wird dabei derart durchgeführt, insbesondere mit einer derartigen Intensität und Dauer durchgeführt werden, dass das bereits verfestigte Aufbaumaterial 20 nicht aufschmilzt. Mit anderen Worten, durch die Bestrahlung bei dieser Art der Verfahrensführung wird ein Teil des bereits aufgebauten Testkörpers 40 mittels einer strahlungsbasiert zugeführten definierten Energiemenge erwärmt. Es kann dann über die Überwachung bzw. Erfassung mittels der Sensoreinheit(en) 26 beispielsweise die Wärmeleitung im aufgebauten Testkörpers 40 geprüft bzw. ermittelt werden.

Im Beispiel von Figur 4 wurde zunächst ein linienförmiger Testkörper 40 aufgebaut. Der Testkörper 40 ist in Figur 4 als schraffierte Fläche dargestellt. Zur Durchführung des Verfahrens wird dann der Zielpunkt 36b auf den bereits verfestigten Testkörpers 40 gerichtet. Die Erfassungsbereiche 30a und 30c der jeweils ersten und dritten Sensoreinheit 26a bzw. 26b werden ebenso auf den bereits verfestigten Testkörpers 40 gerichtet, wobei die Erfassungsbereiche 30 jedoch vorliegend beabstandet zum Zielpunkt 36b der zweiten Scaneinheit 22b angeordnet sind. Während der Bestrahlung wird der Zielpunkt 36b der zweiten Scaneinheit 22b nicht bewegt. Die Erfassungsbereiche 30a und 30c der ersten und dritten Sensoreinheit 26a, 26c werden ebenfalls während der Durchführung des Verfahrens nicht bewegt. Über die zweite Strahlquelle 24b wird nun impulsartig ein Strahl 32b auf den Zielpunkt 36b abgegeben. Die Dauer und Intensität der Bestrahlung sind dabei bekannt, sodass die an den Testkörper 40 abgegebene Energiemenge bestimmbar ist. Die Sensoreinheiten 26 erfassen nun den Wärmeverlauf im Testkörper 40. Dabei erfassen die Sensoreinheit 26 Daten vom Testkörper 40 über einen längeren Zeitraum hinweg als die Bestrahlung andauert.

Im vorliegend illustrierten Beispiel besteht eine direkte Verbindung 44 aus verfestigtem Aufbaumaterial 20 zwischen dem bestrahlten und dem erfassten Bereich bzw. durch die Sensoreinheiten 26 beobachteten Bereich des Testkörpers 40. Über die von den Sensoreinheiten 26 erfassten Messsignale können in einem Auswärtsschritt beispielsweise Rückschlüsse über das Wärmeleitverhalten in Abschnitten des Testkörpers 40 gezogen werden.

Die durch die erste Sensoreinheit und/oder ggf. dritte Sensoreinheit 26a, 26c erfassten Messsignale können im Rahmen einer Auswertung beispielsweise auch mit auf gleiche Art und Weise erfassten Messignalen aus einem vorangegangenen Aufbau eines Testkörpers 40 verglichen werden.

## Patentansprüche

1. Verfahren zum Betreiben einer Herstelleinrichtung (10) zum additiven Herstellen eines dreidimensionalen Objekts durch schichtweises Aufbringen und selektives Verfestigen eines pulverförmigen Aufbaumaterials (20) innerhalb eines in einer Arbeitsfläche (14) liegenden Baufelds (16),
wobei die Herstelleinrichtung (10) wenigstens zwei Scaneinheiten (22) aufweist, die ausgebildet und angeordnet sind, um jeweils einen durch die jeweilige erste bzw. zweite Scaneinheit (22) gesteuerten Strahl (32) einer jeweiligen ersten bzw. zweiten Strahlquelle (24), auf verschiedene Zielpunkte (36) auf dem Baufeld (16) zu richten,
wobei zumindest der ersten Scaneinheit (22a) eine erste Sensoreinheit (26a) zugeordnet ist, deren Erfassungsbereich (30a) über die erste Scaneinheit (22a) auf den Zielpunkt (36a) der ersten Scaneinheit (22a) gerichtet ist,
wobei das Verfahren die folgenden Schritte aufweist:
Richten des Erfassungsbereichs (30a) der ersten Sensoreinheit (26a) mittels der ersten Scaneinheit (22a) auf wenigstes einen ersten Teilbereich eines Testkörperbereichs (34), ohne dass die erste Scaneinheit (22a) einen Strahl auf den Testkörperbereich (34) richtet,
Bestrahlen zumindest eines Teils des Testkörperbereichs (34) mit einem Strahl (32), der über die zweite Scaneinheit (22b) auf den Testkörperbereich (34) gerichtet ist, und
insbesondere Auswerten von durch die erste Sensoreinheit (26a) erfassten Messsignalen
**dadurch gekennzeichnet,**
**dass** das Bestrahlen mittels der zweiten Scaneinheit (22b) im Anschluss an einen Bestrahlungsvorgang erfolgt in dem zunächst pulverförmiges Aufbaumaterial (20) verfestigt wurde,
**dass** die Bestrahlung mit dem Strahl (32) der zweiten Scaneinheit (22b) impulsartig und auf den bereits verfestigten Teil des Aufbaumaterials (20) im Testkörperbereich (34) erfolgt,
**dass** die impulsartige Bestrahlung derart durchgeführt wird, insbesondere mit einer derartigen Intensität durchgeführt wird, dass das bereits verfestigte Aufbaumaterial nicht aufschmilzt, und
**dass** der Erfassungsbereich (30a, 30c) der ersten Sensoreinheit (26a, 26c) einen verfestigten Bereich des Aufbaumaterial erfasst, der zu dem impulsartig bestrahlten Teil beabstandet ist.

2. Verfahren nach Anspruch 1, **dadurch gekennzeichnet, dass** eine Herstelleinrichtung (10) verwendet wird, in der der zweiten Scaneinheit (22b) eine zweite Sensoreinheit (26b) zugeordnet ist, deren Erfassungsbereich (30b) über die zweite Scaneinheit (22b) auf den Zielpunkt (36b) der zweiten Scaneinheit (22b) gerichtet ist, insbesondere wobei beim Bestrahlen des Teils des Testkörperbereichs (34) mit dem Strahl (32), der über die zweite Scaneinheit (22b) auf den Testkörperbereich (34) gerichtet ist, die zweite Sensoreinheit (26b) den Zielpunkt (36b) der zweiten Scaneinheit (22b) erfasst, insbesondere während dieser mittels der zweite Scaneinheit (22b) über den Testkörperbereich (34) bewegt wird.

3. Verfahren nach einem der voranstehenden Ansprüche, **dadurch gekennzeichnet, dass** der Erfassungsbereich (30a) der ersten Sensoreinheit (26a) stationär gehalten wird, während des Bestrahlens des Teils des Testkörperbereichs (34) durch den Strahl der zweiten Scaneinheit (22b), insbesondere wobei der Zielpunkt (36b) der zweiten Scaneinheit (22b) während des Bestrahlens mittels der zweiten Scaneinheit (22b) über den Testkörperbereich (34) bewegt wird, insbesondere wobei der Zielpunkt (36b) der zweiten Scaneinheit (22b) durch den Erfassungsbereich (30a) der ersten Sensoreinheit (26a) bewegt wird.

4. Verfahren nach einem der voranstehenden Ansprüche, **dadurch gekennzeichnet, dass** eine Herstelleinrichtung (10) verwendet wird, die eine dritte Scaneinheit (22c) und eine dritte Sensoreinheit (26c) aufweist, insbesondere wobei die dritte Scaneinheit (22c) ausgebildet und angeordnet ist, um einen durch die dritte Scaneinheit (22c) gesteuerten Strahl (32) einer dritten Strahlquelle (24c) auf verschiedene Zielpunkte (36c) auf dem Baufeld (16) zu richten, wobei während des Bestrahlens mittels der zweiten Scaneinheit (22b) der Erfassungsbereich (30c) der dritten Sensoreinheit (26c) mittels der dritten Scaneinheit (22c) auf wenigstes einen zweiten Teilbereich des Testkörperbereichs (34) gerichtet ist gegebenenfalls ohne dass die dritte Scaneinheit (22c) einen Strahl (32) auf den Testkörperbereich (34) richtet.

5. Verfahren nach Anspruch 4, **dadurch gekennzeichnet, dass** während des Bestrahlens mittels der zweiten Scaneinheit (22b) der Erfassungsbereich (30a, 30c) der ersten Sensoreinheit (26a) und der dritten Sensoreinheit (26c) einander überlappen, insbesondere konzentrisch zueinander angeordnet sind, wobei der Erfassungsbereich (30a, 30c) einer der Sensoreinheiten (26a, 26c) derart, insbesondere eingestellt, insbesondere defokussiert, ist, dass er den Erfassungsbereich (30a, 30c) der anderen Sensoreinheit (26a, 26c) vollständig enthält.

6. Verfahren nach einem der voranstehenden Ansprüche, **dadurch gekennzeichnet, dass** das Bestrahlen mittels der zweiten Scaneinheit (22b) derart durchgeführt wird, insbesondere mit einer derartigen Intensität durchgeführt wird, dass zunächst pulverförmiges Aufbaumaterial (20) sich verfestigt.

7. Verfahren nach einem der Ansprüche 4 bis 6, **dadurch gekennzeichnet, dass** der Erfassungsbereich (30a, 30c) der dritten Sensoreinheit (26a, 26c) einen verfestigten Bereich des Aufbaumaterials (20) erfasst, der zu dem impulsartig bestrahlten Teil beabstandet ist.

8. Verfahren nach einem der voranstehenden Ansprüche, **dadurch gekennzeichnet, dass** der Erfassungsbereich (30a, 30c) einen verfestigten Bereich des Aufbaumaterials (20) erfasst, der mit dem impulsartig bestrahlen Teil direkt über verfestigtes Aufbaumaterial verbunden ist.

9. Verfahren nach einem der voranstehenden Ansprüche, **dadurch gekennzeichnet, dass** die durch die erste Sensoreinheit (26) und/oder gegebenenfalls dritte Sensoreinheit (26c) erfassten Messsignale mit Messignalen aus einer identischen Messung aus einem vorangegangenen Aufbau eines Testkörpers (40) verglichen werden.

10. Verfahren nach einem der voranstehenden Ansprüche, **dadurch gekennzeichnet, dass** es den Aufbau von zwei Testkörpern (40) umfasst, wobei beim Aufbau der beiden Testkörper (40) die Bestrahlung mittels des Strahls (32) der zweiten Scaneinheit (22b) jeweils identisch ist, insbesondere und die Erfassung mittels der zweiten Sensoreinheit (26b) und/oder gegebenenfalls dritten Sensoreinheit (26c) jeweils, wenigstens temporär, vorzugsweise vollständig, identisch ist.

11. Verfahren nach einem der voranstehenden Ansprüche, **dadurch gekennzeichnet, dass** das Verfahren die metallurgische Analyse mittels Erstellen von Schliffbildern eines im Testkörperbereich (34) aufgebauten Testkörpers (40) umfasst.

12. Verfahren nach einem der voranstehenden Ansprüche, **dadurch gekennzeichnet, dass** die während dem Aufbau des Testkörpers (40) erfassten Werte mit Referenzwerten verglichen werden und der Aufbau des Testkörpers mittels des Vergleichs der erfassten Werte mit den Referenzwerten gesteuert oder geregelt wird.

13. Verfahren nach einem der voranstehenden Ansprüche, **dadurch gekennzeichnet, dass** die während dem Aufbau des Testkörpers (40) erfassten Werte als Referenzwerte verwendet werden und bei einem weiteren Aufbauvorgang diese Referenzwerte mit während dem weiteren Aufbauvorgang erfassten Werten verglichen werden, insbesondere wobei der weitere Aufbauvorgang mittels des Vergleichs der erfassten Werte mit den Referenzwerten gesteuert oder geregelt wird.

## Claims

1. Method for operating a manufacturing device (10) for additive manufacturing of a three-dimensional object by application in layers and selective solidification of a powdered building material (20) within a construction site (16) lying in a working surface (14),
the manufacturing device (10) having at least two scanning units (22) which are designed and arranged in order to in each case direct a beam (32) of a relevant first or second beam source (24), which beam is controlled by the relevant first or second scanning unit (22), respectively, onto different target points (36) on the construction site (16),
a first sensor unit (26a) being assigned to at least the first scanning unit (22a), the detection region (30a) of which sensor unit is directed onto the target point (36a) of the first scanning unit (22a) by the first scanning unit (22a),
the method comprising the steps of:
directing the detection region (30a) of the first sensor unit (26a) onto at least a first portion of a test body region (34) by means of the first scanning unit (22a), without the first scanning unit (22a) directing a beam onto the test body region (34),
irradiating at least part of the test body region (34) with a beam (32) that is directed onto the test body region (34) by the second scanning unit (22b), and
in particular evaluating measurement signals detected by the first sensor unit (26a),
**characterized in that**
the irradiation by means of the second scanning unit (22b) takes place following an irradiation process in which initially powdered building material (20) was solidified,
the irradiation with the beam (32) of the second scanning unit (22b) takes place in a pulse-like manner and on the already solidified part of the building material (20) in the test body region (34),
the pulse-like irradiation is carried out in such a way, in particular with such an intensity, that the already solidified building material does not melt, and
the detection region (30a, 30c) of the first sensor unit (26a, 26c) detects a solidified region of the building material that is spaced apart from the part irradiated in a pulse-like manner.

2. Method according to claim 1, **characterized in that** a manufacturing device (10) is used in which a second sensor unit (26b) is assigned to the second scanning unit (22b), the detection region (30b) of which sensor unit is directed to the target point (36b) of the second scanning unit (22b) by the second scanning unit (22b), the second sensor unit (26b) in particular detecting the target point (36b) of the second scanning unit (22b) during the irradiation of the part of the test body region (34) with the beam (32) directed onto the test body region (34) by the second scanning unit (22b), in particular while said target point is moved over the test body region (34) by means of the second scanning unit (22b).

3. Method according to any of the preceding claims, **characterized in that** the detection region (30a) of the first sensor unit (26a) is held stationary during the irradiation of the part of the test body region (34) by the beam of the second scanning unit (22b), the target point (36b) of the second scanning unit (22b) in particular being moved over the test body region (34) by means of the second scanning unit (22b) during the irradiation, the target point (36b) of the second scanning unit (22b) in particular being moved through the detection region (30a) of the first sensor unit (26a).

4. Method according to any of the preceding claims, **characterized in that** a manufacturing device (10) is used, which comprises a third scanning unit (22c) and a third sensor unit (26c), the third scanning unit (22c) in particular being designed and arranged to direct a beam (32) of a third beam source (24c), which beam is controlled by the third scanning unit (22c), onto different target points (36c) on the construction site (16), the detection region (30c) of the third sensor unit (26c) being directed onto at least one second portion of the test body region (34) by means of the third scanning unit (22c) during the irradiation by means of the second scanning unit (22b), optionally without the third scanning unit (22c) directing a beam (32) onto the test body region (34).

5. Method according to claim 4, **characterized in that,** during the irradiation by means of the second scanning unit (22b), the detection region (30a, 30c) of the first sensor unit (26a) and of the third sensor unit (26c) overlap with one another, in particular are arranged concentrically to one another, the detection region (30a, 30c) of one of the sensor units (26a, 26c) in particular being set, in particular in a defocused manner, in such a way that it completely contains the detection region (30a, 30c) of the other sensor unit (26a, 26c).

6. Method according to any of the preceding claims, **characterized in that** the irradiation by means of the second scanning unit (22b) is carried out in such a way, in particular with such an intensity, that initially powdered building material (20) solidifies.

7. Method according to any of claims 4 to 6, **characterized in that** the detection region (30a, 30c) of the third sensor unit (26a, 26c) detects a solidified region of the building material (20) that is spaced apart from the part irradiated in a pulse-like manner.

8. Method according to any of the preceding claims, **characterized in that** the detection region (30a, 30c) detects a solidified region of the building material (20), which region is directly bonded to the part irradiated in a pulse-like manner by means of solidified building material.

9. Method according to any of the preceding claims, **characterized in that** the measurement signals detected by the first sensor unit (26) and/or optionally the third sensor unit (26c) are compared with measurement signals from an identical measurement from a previous construction of a test body (40).

10. Method according to any of the preceding claims, **characterized in that** it comprises the construction of two test bodies (40), the irradiation by means of the beam (32) of the second scanning unit (22b) in each case being identical during the construction of the two test bodies (40), in particular and the detection by means of the second sensor unit (26b) and/or optionally the third sensor unit (26c) being at least temporarily, preferably completely, identical in each case.

11. Method according to any of the preceding claims, **characterized in that** the method comprises metallurgical analysis by means of creating micrographs of a test body (40) constructed in the test body region (34).

12. Method according to any of the preceding claims, **characterized in that** the values detected during the construction of the test body (40) are compared with reference values and the construction of the test body is controlled in an open-loop or closed-loop manner by means of the comparison of the detected values with the reference values.

13. Method according to any of the preceding claims, **characterized in that** the values detected during the construction of the test body (40) are used as reference values and, in a further construction process, these reference values are compared with values detected during the further construction process, the further building process in particular being controlled in an open-loop or closed-loop manner by means of the comparison of the detected values with the reference values.

## Revendications

1. Procédé pour faire fonctionner un dispositif de fabrication (10) pour la fabrication additive d'un objet tridimensionnel par application couche par couche et solidification sélective d'un matériau constitutif (20) pulvérulent à l'intérieur d'un champ de construction (16) situé dans une surface de travail (14),
dans lequel le dispositif de fabrication (10) présente au moins deux unités de balayage (22), qui sont réalisées et disposées pour diriger respectivement un rayon (32) d'une première ou deuxième source de rayon (24) respective commandé par la première ou deuxième unité de balayage (22) respective sur différents points cibles (36) sur le champ de construction (16),
dans lequel une première unité de détection (26a), dont la zone d'acquisition (30a) est dirigée sur le point cible (36a) de la première unité de balayage (22a) par l'intermédiaire de la première unité de balayage (22a), est associée au moins à la première unité de balayage (22a),
dans lequel le procédé présente les étapes suivantes :
le fait de diriger la zone d'acquisition (30a) de la première unité de détection (26a) au moyen de la première unité de balayage (22a) sur au moins une première zone partielle d'une zone de corps de test (34), sans que la première unité de balayage (22a) ne dirige un rayon sur la zone de corps de test (34),
l'irradiation d'au moins une partie de la zone de corps de test (34) avec un rayon (32), qui est dirigé sur la zone de corps de test (34) par l'intermédiaire de la deuxième unité de balayage (22b), et
en particulier l'évaluation de signaux de mesure acquis par la première unité de détection (26a),
**caractérisé en ce**
**que** l'irradiation au moyen de la deuxième unité de balayage (22b) s'effectue à la suite d'un processus d'irradiation dans le matériau constitutif (20) tout d'abord pulvérulent,
**que** l'irradiation avec le rayon (32) de la deuxième unité de balayage (22b) s'effectue de manière pulsée et sur la partie déjà solidifiée du matériau constitutif (20) dans la zone de corps de test (34),
**que** l'irradiation pulsée est réalisée de telle sorte, en particulier est réalisée avec une intensité telle que le matériau constitutif déjà solidifié ne fond pas, et
**que** la zone d'acquisition (30a, 30c) de la première unité de détection (26a, 26c) acquiert une zone solidifiée du matériau constitutif qui est espacée de la partie irradiée de manière pulsée.

2. Procédé selon la revendication 1, **caractérisé en ce qu'**un dispositif de fabrication (10) est utilisé, dans lequel une deuxième unité de détection (26b), dont la zone d'acquisition (30b) est dirigée sur le point cible (36b) de la deuxième unité de balayage (22b) par l'intermédiaire de la deuxième unité de balayage (22b), est associée à la deuxième unité de balayage (22b), en particulier dans lequel lors de l'irradiation de la partie de la zone de corps de test (34) avec le rayon (32), qui est dirigé sur la zone de corps de test (34) par l'intermédiaire de la deuxième unité de balayage (22b), la deuxième unité de détection (26b) acquiert le point cible (36b) de la deuxième unité de balayage (22b), en particulier pendant que celle-ci est déplacée au moyen de la deuxième unité de balayage (22b) sur la zone de corps de test (34) .

3. Procédé selon l'une quelconque des revendications précédentes, **caractérisé en ce que** la zone d'acquisition (30a) de la première unité de balayage (26a) est maintenue fixe, pendant l'irradiation de la partie de la zone de corps de test (34) par le rayon de la deuxième unité de balayage (22b), en particulier dans lequel le point cible (36b) de la deuxième unité de balayage (22b) est déplacé pendant l'irradiation au moyen de la deuxième unité de balayage (22b) sur la zone de corps de test (34), en particulier dans lequel le point cible (36a) de la deuxième unité de balayage (22b) est déplacé par la zone d'acquisition (30a) de la première unité de détection (26a) .

4. Procédé selon l'une quelconque des revendications précédentes, **caractérisé en ce qu'**un dispositif de fabrication (10) est utilisé, qui présente une troisième unité de balayage (22c) et une troisième unité de détection (26c), en particulier dans lequel la troisième unité de balayage (22c) est réalisée et disposée pour diriger un rayon (32) d'une troisième source de rayon (24c) commandé par la troisième unité de balayage (22c) sur différents points cibles (36c) sur le champ de construction (16), dans lequel pendant l'irradiation au moyen de la deuxième unité de balayage (22b) la zone d'acquisition (30c) de la troisième unité de détection (26c) est dirigée au moyen de la troisième unité de balayage (22c) sur au moins une deuxième zone partielle de la zone de corps de test (34) éventuellement sans que la troisième unité de balayage (22c) ne dirige un rayon (32) sur la zone de corps de test (34).

5. Procédé selon la revendication 4, **caractérisé en ce que** pendant l'irradiation au moyen de la deuxième unité de balayage (22b) les zones d'acquisition (30a, 30c) de la première unité de détection (26a) et de la troisième unité de détection (26c) se chevauchent, en particulier sont disposées de manière concentrique l'une par rapport à l'autre, dans lequel la zone d'acquisition (30a, 30c) d'une des unités de détection (26a, 26c) est en particulier réglée, en particulier défocalisée de telle sorte qu'elle contient entièrement la zone d'acquisition (30a, 30c) de l'autre unité de détection (26a, 26c).

6. Procédé selon l'une quelconque des revendications précédentes, **caractérisé en ce que** l'irradiation est réalisée au moyen de la deuxième unité de balayage (22b) de telle sorte, en particulier est réalisée avec une intensité telle que tout d'abord le matériau constitutif (20) tout d'abord pulvérulent se solidifie.

7. Procédé selon l'une quelconque des revendications 4 à 6, **caractérisé en ce que** la zone d'acquisition (30a, 30c) de la troisième unité de détection (26a, 26c) acquiert une zone solidifiée du matériau constitutif (20), qui est espacée de la partie irradiée de manière pulsée.

8. Procédé selon l'une quelconque des revendications précédentes, **caractérisé en ce que** la zone d'acquisition (30a, 30c) acquiert une zone solidifiée du matériau constitutif (20) qui est reliée directement à la partie irradiée de manière pulsée par l'intermédiaire du matériau constitutif solidifié.

9. Procédé selon l'une quelconque des revendications précédentes, **caractérisé en ce que** les signaux de mesure acquis par la première unité de détection (26) et/ou éventuellement troisième unité de détection (26c) sont comparés aux signaux de mesure provenant d'une mesure identique émanant d'une constitution précédente d'un corps de test (40).

10. Procédé selon l'une quelconque des revendications précédentes, **caractérisé en ce qu'**il comprend la constitution de deux corps de test (40), dans lequel lors de la constitution des deux corps de test (40) l'irradiation au moyen du rayon (32) de la deuxième unité de balayage (22b) est respectivement identique, en particulier et l'acquisition au moyen de la deuxième unité de détection (26b) et/ou éventuellement troisième unité de détection (26c) est respectivement, au moins temporairement, de préférence entièrement, identique.

11. Procédé selon l'une quelconque des revendications précédentes, **caractérisé en ce que** le procédé comprend l'analyse métallurgique au moyen de l'élaboration de micrographies d'un corps de test (40) constitué dans la zone de corps de test (34).

12. Procédé selon l'une quelconque des revendications précédentes, **caractérisé en ce que** les valeurs acquises pendant la constitution du corps de test (40) sont comparées à des valeurs de référence et la constitution du corps de test est commandée ou régulée au moyen de la comparaison des valeurs acquises aux valeurs de référence.

13. Procédé selon l'une quelconque des revendications précédentes, **caractérisé en ce que** les valeurs acquises pendant la constitution du corps de test (40) sont utilisées en tant que valeurs de référence et lors d'un autre processus de constitution ces valeurs de référence sont comparées à des valeurs acquises pendant l'autre processus de constitution, en particulier dans lequel l'autre processus de constitution est commandé ou régulé au moyen de la comparaison des valeurs acquises aux valeurs de référence.
